# EUROPEAN PATENT APPLICATION

(11) **EP 1 666 220 A1**
(43) Date of publication of application: **07.06.2006**
(21) Application number: 04773371.2
(22) Date of filing: 16.09.2004
(51) Int. Cl.: B28B 11/04, H01J 61/35

(54) **METHOD FOR PRODUCING CERAMIC SINTERED ARTICLE, CERAMIC SINTERED ARTICLE AND LIGHT EMITTING CONTAINER**

(30) Priority: 19.09.2003 JP 2003328345
(71) Applicant: NGK INSULATORS, LTD., Nagoya-city, Aichi 467-8530 (JP)
(72) Inventor: SUZUKI, Michio, c/o NGK Insulators, Ltd, Nagoya-city, Aichi 467-8530 (JP)
(74) Representative: Paget, Hugh Charles Edward
(86) International application number: PCT/JP2004/013981
(87) International publication number: WO 2005/028170

(57) **Abstract**

A sintered body of a ceramics and a slurry comprising powder of the ceramic and a dispersing medium are prepared. The surface of the molded body is coated with the slurry so that the slurry forms free surface. The molded body is then sintered to obtain a ceramic sintered body. It is thus possible to reduce the roughness of the surface of the molded body and to improve the flatness of the sintered body.

## Description

### BACKGROUND OF THE INVENTION

### 1. Field of the Invention

The present invention relates to a method of producing ceramic sintered bodies, ceramic sintered bodies and luminous vessels.

### 2. Related Art Statement

Yttrium · aluminum · garnet (Y₃Al₅O₁₂: YAG) ceramics has a high transparency in a wide range of visible and infrared region. It is thus studied to apply the ceramics as a substitute material for sapphire and a material for a luminous vessel of a discharge lamp.

The inventors have studied to apply yttrium · aluminum · garnet sintered body as a material of a luminous vessel of, for example, a high pressure discharge lamp (such as metal halide and mercury lamps). Such high pressure discharge lamp is expected as a light source of a head lamp for an automobile or a projector. The reasons are as follows. Yttrium· aluminum garnet has a high transparency, so that discharge ark in a discharge vessel can be utilized as a point light source by forming the discharge vessel of the sintered body.

According to Japanese patent publication No. 2003-73584A, aqueous coating solution of ceramics is applied onto a ceramic sintered body and then fired to obtain a crack-free and translucent thin film excellent in surface flatness.

According to Japanese patent 3407284B, a corrosion resistant film is formed on one face of a translucent mother material. The corrosion resistant film is formed of an oxide having a standard generation energy of Gibbs of negative value whose absolute value is larger than that of the mother material. The corrosion resistant film is made of an oxide of an element forming amalgam sealed in a luminous vessel.

According to Japanese patent publication No. 11-255559A, a ceramic film of TmAG, YbAG or LuAG is formed on the inner face of a tube shaped YAG of a discharge vessel for improving the corrosion resistance.

### DISCLOSURE OF THE INVENTION

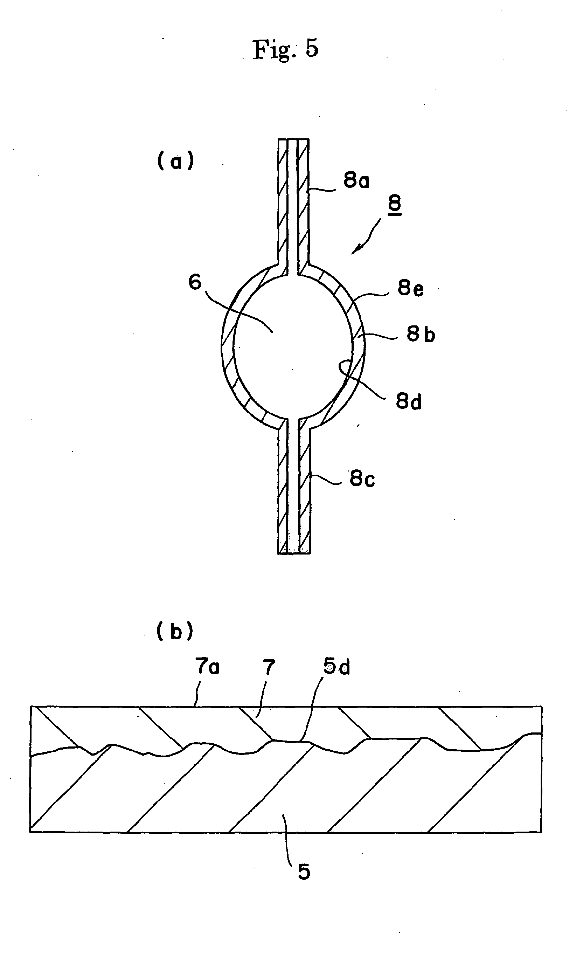

A luminous vessel has s shape of a tube whose ends have smaller diameters, respectively, for example as shown in Fig. 5 (a). The luminous vessel 8 has a linear transmittance of, for example, as low as about several percents direct after the sintering. It is thus necessary to grind an outer face 8e and inner side face 8d of the luminous vessel 8 with diamond abrasive grains etc. and thereby to improve the flatness of the outer side face 8e and inner side face 8d, so as to improve the linear transmittance of the luminous vessel 8. However, both end parts 8a and 8c of the luminous vessel 8 has a diameter smaller than that of a central luminous part 8b. It is thus difficult to grind the inner face 8d facing the luminous space 6, so that substantial works and costs are required for completing the grinding process until a sufficiently high transmittance is obtained.

An object of the present invention is to improve the flatness of the surface of a ceramic sintered body.

The present invention provides a method of producing a ceramic sintered body, said method comprising the steps of:
preparing a ceramic molded body;
preparing a slurry comprising powder of the ceramic and a dispersing medium;
coating a surface of said molded body with the slurry so as to form free surface; and
sintering the molded body.

The present invention further provides a ceramic sintered body obtained according the above method, and a luminous vessel comprising the ceramic sintered body.

The present inventors have reached the idea of covering the surface of a molded body with a slurry containing powder of the ceramics constituting the molded body so as to form free surface. It is found that the surface of the sintered body can be finished to be flat. It is further possible to alleviate or minimize the necessity of grinding after the sintering.

Although the reasons are not clearly understood, the following speculation might be considered. A mold is molded for the production of a molded body. The surface roughness of the inner wall surface of the mold is transcripted to the surface of the molded body, so that some roughness is left on the surface of the molded body. After that, the slurry of powder for forming at least a part of the molded body is coated onto the surface so as to form free surface. At this stage, a flat ceramic surface can be formed. During the subsequent sintering step, the deterioration of surface roughness is small to prove that a flat sintered surface can be formed.

Besides, as shown in Japanese patent publication 2003-73584A, it may be considered to coat slurry for forming the same kind of material as a sintered body on the surface of the sintered body. However, according to the method, an additional sintering step is further required for forming a coating film, and cracks tend to be generated along an interface of the thus obtained coating film and sintered body. Further, According to Japanese patent No. 3407284B and Japanese patent publication No. 11-255559A, slurry for a corrosion resistant film is coated on a ceramic molded body, and the molded body is then sintered. According to the method, although a corrosion resistant film can be formed on the surface of the sintered body, the flatness of the surface of the resulting sintered body cannot be assured. The present invention is characterized in that slurry containing powder of the ceramics forming the molded body is coated onto the ceramic molded body so as to form free surface.

### BRIEF DESCRIPTION OF THE DRAWINGS

Fig. 1 is a flow chart showing a process according to one embodiment of the present invention.
Fig. 2 (a) is a cross sectional view schematically showing a molded body 1.
Fig. 2 (b) is a longitudinal cross sectional view showing a molded body 5.
Fig. 3 is a schematic view showing an example of flowing a solvent to the molded body 5.
Fig. 4 is a longitudinal cross sectional view showing a coating 7 formed on the inner and outer faces of the molded body 5.
Fig. 5 (a) is a longitudinal sectional view showing a luminous vessel (sintered body) 8.
Fig. 5 (b) is a cross sectional view schematically showing a coating 7 on the surface 5d of the molded body 5.
Fig. 6 is a photograph, taken by an electron microscope, of a sample according to a comparative example 1.
Fig. 7 is a photograph, taken by an electron microscope, of the surface of a sample according to inventive example 1.

### Preferred Embodiments of the Invention

The present invention will be further described referring to preferred embodiments.

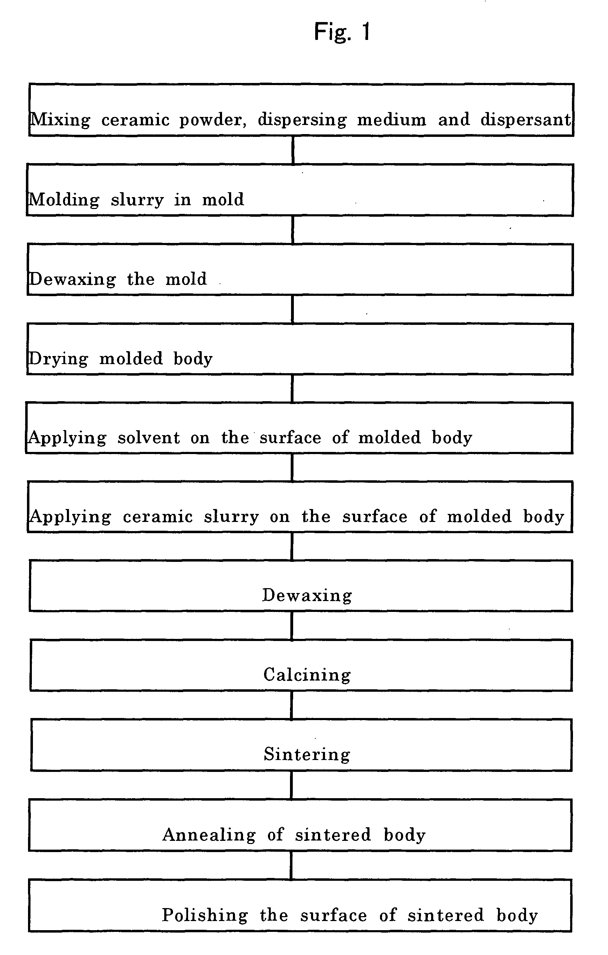

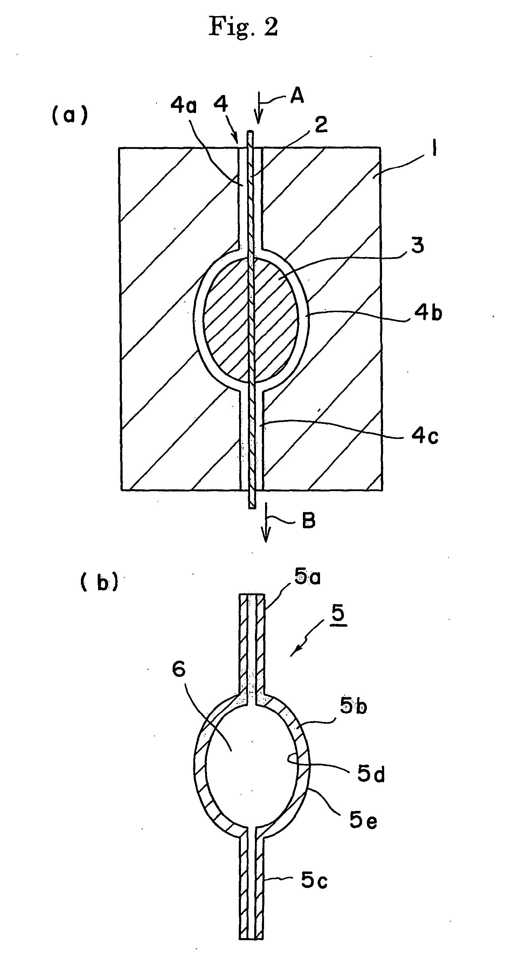

Fig. 1 is a flow chart showing a preferred embodiment. The embodiment of the application for a luminous container will be described referring to Figs. 2 to 5 according to the flow chart.

First, ceramic powder, a dispersion medium and optionally a dispersant are mixed to obtain slurry. The kind of ceramic powder is not particularly limited and includes the followings.

Oxide ceramics such as alumina, zirconia, titania, silica, magnesia, ferrite, cordierite and the oxide of a rare earth element such as yttria

Composite oxides such as barium titanate, strontium titanate, lead zirconate titanate, manganite of a rare earth element and chromite of a rare earth element

Nitride ceramics such as aluminum nitride, silicon nitride, sialon and aluminum oxynitride

Carbide ceramics such as silicon carbide, boron carbide and tungsten carbide

Fluoride ceramics such as beryllium fluoride, magnesium fluoride, calcium fluoride, strontium fluoride and barium fluoride

The dispersing medium is not particularly limited as far as it can be used for slurry production, and the following may be listed. That is, it may be at least one of (1) an alcohol, (2) a ketone, (3) an ether, (4) triacetin and (5) an ester.

Further, an additional additive such as a dispersant and a gelling agent may be added if required.

The thus obtained slurry is then contained in a mold for the subsequent molding. For example, according to an example shown in Fig. 2 (a), a core 2 having a wax core 3 is inserted into the mold 1 to define a molding space 4. The molding space 4 includes elongate molding spaces 4a and 4c for end parts and a molding space 4b for a luminous part. As shown in an arrow "A", slurry is injected through the space 4a until the spaces 4b and 4c are filled. Excessive slurry is then discharged to the outside of the mold as an arrow "B". The mold 1 is then heated to remove the wax core 3 and the mold 1 is opened. The thus obtained molded body 5 shown in Fig. 2 (b) is dried. The molded body 5 has, for example, end parts 5a and 5c and a luminous part 5b. A space 6 is formed in the luminous part 5b.

Ceramic slurry is then coated onto a desired surface of the molded body 5. In the case of a luminous vessel, the slurry is coated onto the outer face 5e and inner face 5d. According to a preferred embodiment, a solvent is contacted with the surface of the molded body before the coating of the slurry. It is thus possible to replace air bubbles remaining in the proximity of the surface of the molded body with the solvent and to improve the wettability of the surface of the molded body by the solvent. Although the kind of the solvent is not limited, the followings may be listed. That is, it is listed at least one of (1) an alcohol, (2) a ketone, (3) an ether, (4) triacetin and (5) an ester.

Most preferably, the wet angle of the solvent with respect to the surface of the molded body is made 60 ° or larger. Further, most preferably, the dispersing medium constituting the slurry used in the subsequent step includes at least one of the solvent.

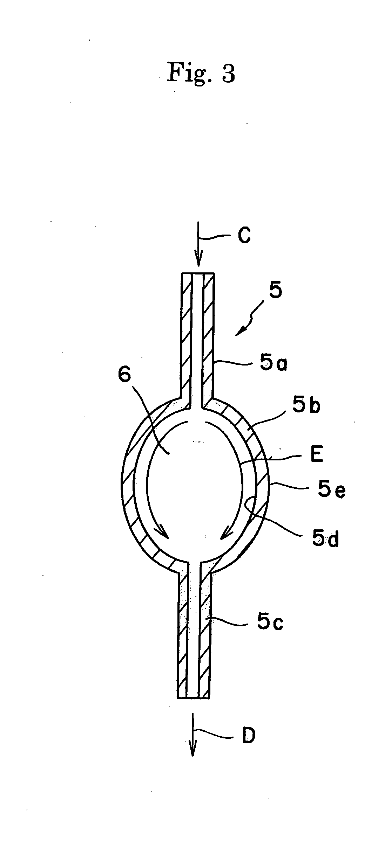

A method of contacting the solvent with the surface of the molded body is not particularly limited. For example, the molded body may be immersed in the solvent. Alternatively, the solvent may be cast onto the surface of the molded body. For example, as shown in Fig. 3, the solvent is flown through the end part 5a as an arrow "C", along the inner face 5d facing the space 6 as an arrow "E" and then discharged as an arrow "D".

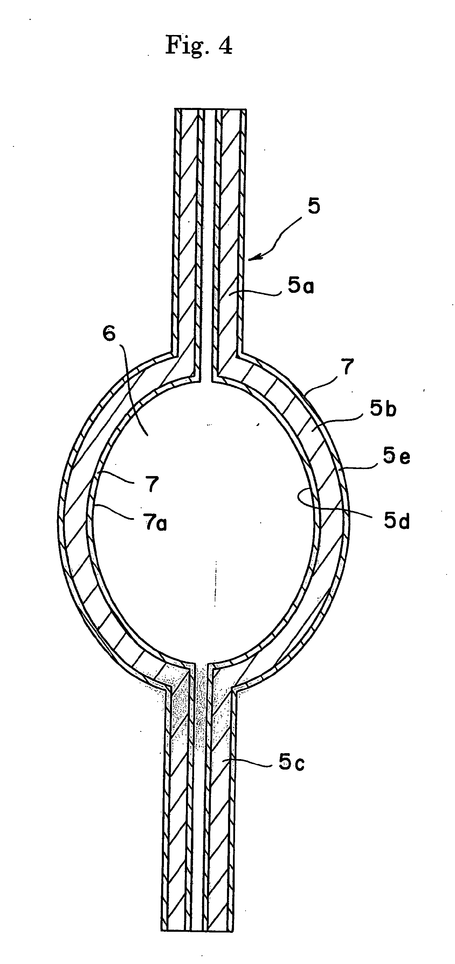

The ceramic slurry is coated onto the surface of the molded body. The method of coating is not particularly limited. For example, the molded body may be immersed into the slurry. Alternatively, the slurry may be casted onto the surface of the molded body. For example, as shown in Fig. 3, the slurry is flown into the end part 5a as an arrow "C", flown along the inner face 5d (or outer face 5e9 facing the space 6 as an arrow "E" and then discharged as an arrow "D". It is thus possible to form a coating 7 over the whole of the inner face 5d and the outer face 5e of the molded body as shown in Fig. 4. As shown in Fig. 5 (b), the surface 7a of the coating 7 is flattened compared with the surface 5d of the molded body before the coating, as described earlier.

The molded body is then dewaxed, calcined and sintered to obtain a luminous vessel (sintered body) 8 shown in Fig. 5 (a). The sintered body 8 may be further annealed. The luminous vessel 8 has end parts 8a and 8c and luminous part 8b.

It is now provided that the slurry is coated onto the surface of the sintered body. In this case, the difference of shrinkage occurs between the sintered body and coating film in the subsequent sintering step, so that the thus obtained film tends to have defects such as peeling along the interface. Contrary to this, when the slurry is coated onto the surface of the molded body before sintering, the difference of shrinkage during the subsequent sintering step is small to obtain an excellent film without the peeling.

According to the present invention, the surface of the molded body is coated with the slurry so that free surface is formed thereon. When a liquid is contacted with a molded body without applying an outer force, an interface is formed between the liquid and atmosphere due to the surface tension of the liquid. The interface is referred to as free surface. It is thus required to coat the slurry onto the molded body so that no outer force is directly applied on the slurry by dipping, casting or the like to form free surface.

The thickness of the coating formed on the surface of the molded body may preferably be 20 µm or more and more preferably be 35 µm or more, on the viewpoint of reducing Ra of the surface of the sintered body.

According to a preferred embodiment, the molded body is produced by gel cast molding. Further, according to a preferred embodiment, the slurry coated onto the molded body is made a gel cast slurry. It is thus possible to improve the wettability of the slurry on the molded body and to facilitate the formation of a flat surface.

Gel cast molding is a process to obtain a molded body by casting the slurry containing ceramic powder, the dispersing medium and a gelling agent into a mold and by gelling the slurry with the addition of a crossing agent or adjustment of temperature. Gel cast molding process may be carried out as follows.
(1) A gelling agent and ceramic powder are dispersed in a dispersing agent to produce a slurry. The gelling agent includes polyvinyl alcohol and a prepolymer such as an epoxy resin, phenol resin etc.. The slurry is then supplied into a mold and subjected to three dimensional cross linking reaction with a cross linking agent to solidify the slurry.
(2) An organic dispersing medium having a reactive functional group and a gelling agent are chemically bonded with each other to solidify the slurry. The process is described in Japanese patent publication 2001-335371A (US publication 2002-0033565).

Such gel cast slurry may be produced as follows.
(1) The ceramic powder is dispersed in the dispersing medium to obtain slurry, to which a gelling agent is further added.
(2) The ceramic powder and gelling agent are added to the dispersing medium at the same time and dispersed to produce the slurry.

The sintered body obtained according to the present invention has a smooth surface compared with the case the coating is not formed. When the sintered body is translucent, the linear transmittance is improved compared with the case the coating is not formed. Further, when the surface of the sintered body is ground, Ra value before the grinding is lower compared with the case the coating is not formed, so that time and cost for the grinding process can be reduced. Ra can be further reduced and the linear transmittance can be further improved by the grinding. However, such grinding of the surface of the sintered body is not indispensable.

### EXAMPLES

Samples of examples 1 to 8 made of yttria-alumina garnet were produced according to the process described referring to Figs. 1 to 5. The thus obtained samples were measured for the thickness, Ra and linear transmittance.

According to examples 1 to 6, the following gel cast slurry was produced.

Y₂O₃ powder ( 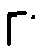 BB 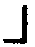 (supplied by Shinetsu Chemical Co. Ltd.)) and Al₂O₃ powder ( 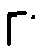 UA-5100 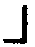 : supplied by Showa Denko Co. Ltd.) were mixed to obtain mixed powder, which was then heated at 1500 °C to obtain a calcined body of yttrium-aluminum garnet. The calcined body was ground to obtain powder, to which a dispersing medium (mixture of triacetin and dimethyl gurutarate) and a binder were added and mixed in a resin ball mil for 48 hours. The ratio of Y/A1 (molar ratio) in the Y₂O₃ powder and Al₂O₃ powder was adjusted at 0.600. The solid contents of the thus obtained slurry were adjusted at 72.3, 70.3 or 68.3 percents, respectively.

According to examples 7 and 8, the following aqueous slurry was produced.

Y₂O₃ powder ( 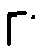 BB 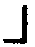 (supplied by Shinetsu Chemical Co. Ltd.)) and Al₂O₃ powder ( 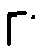 UA-5100 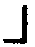 : supplied by Showa Denko Co. Ltd.) were mixed to obtain mixed powder, which was then heated at 1500 °C to obtain a calcined body of yttrium-aluminum garnet. The calcined body was ground to obtain powder, to which water and a binder were added and mixed in a resin ball mil for 48 hours. The ratio of Y/A1 (molar ratio) in the Y₂O₃ powder and Al₂O₃ powder was adjusted at 0.600. The solid content of the thus obtained slurry was 69.3 percent.

According to the examples 1 to 8, each slurry was contained in a mold to obtain a flat-plate shaped molded body. The molded body was dried at 95 °C. The molded bodies of the examples 1 to 6 were immersed in solvent (mixture of triacetin and dimethyl gurutarate). The molded bodies of the examples 7 and 8 were immersed in water. Each molded body was then immersed in the corresponding slurry again to perform the slurry coating.
The time period and counts of immersion were shown in table 1. Further, the thickness of the film was shown in table 1. The thus obtained molded body was dewaxed at 600°C, and then calcined at 1600 °C in air and then sintered at 1800 °C in hydrogen atmosphere. The thus obtained sintered body was then annealed at 1350 °C.

Further, according to comparative example 1, the molded body of the example 1 was produced and sintered as described above according to the same procedure as the example 1, except that the film was not formed on the molded body. According to reference example 1, both faces of the sintered body of the above comparative example 1 were subjected to precise grinding process by means of diamond slurry.

The center line average surface roughenss Ra and linear transmittance of the surface of each sample of each example were measured and the results were shown in table 1.

**Table 1**

| Examples | Solid Content For % | Time Grinding (hr) | Time For ImmerSion (min.) | Conuts Of Immersion | Thickness µm | R a µm | Linear TransMittance (%) |
|---|---|---|---|---|---|---|---|
| 1 | 72.3 | 40 | 3 0 | 1 | 2 5 | 0.15 | 2 9 |
| 2 | 72.3 | 40 | 9 0 | 1 | 3 5 | 0.10 | 1 6 |
| 3 | 70.3 | 40 | 3 0 | 1 | 2 2 | 0.15 | 30 |
| 4 | 70.3 | 40 | 9 0 | 1 | 3 5 | 0.14 | 3 3 |
| 5 | 68.3 | 40 | 3 0 | 1 | 2 4 | 0.18 | 3 1 |
| 6 | 68.3 | 40 | 9 0 | 1 | 2 6 | 0.16 | 3 2 |
| 7 | 69.3 | 40 | 6 0 | 1 | 1 3 0 | 0.09 | 1 8 |
| 8 | 69.3 | 40 | 60 | 2 | 1 8 0 | 0.10 | 2 5 |
| Comparative Example 1 | - | - | - | - | - | 0.26 | < 10 |
| Reference example | - | - | - | - | - | <0.01 | 6 2 |

According to examples 1 to 6, Ra of the sample of the sintered body was smaller and linear transmittance was considerably improved, comparated with the comparative example 1. According to examples 7 and 8, the film thickness of the coating was further increased so that Ra of the sample of the sintered body was further reduced. Besides, according to the reference example 1, the linear transmittance of the sample of the sintered body can be improved to 62 percent by subjecting the sample to precise grinding. According to the examples 1 to 8 of the present invention, the samples were proved to have high linear transmittances even before the grinding.

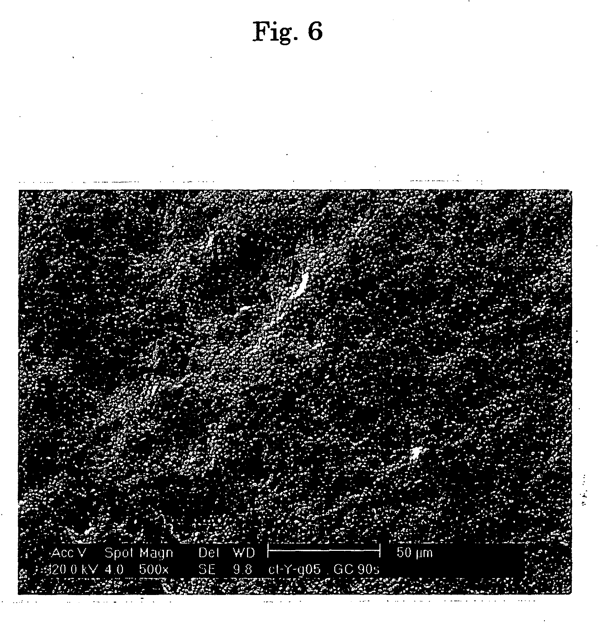

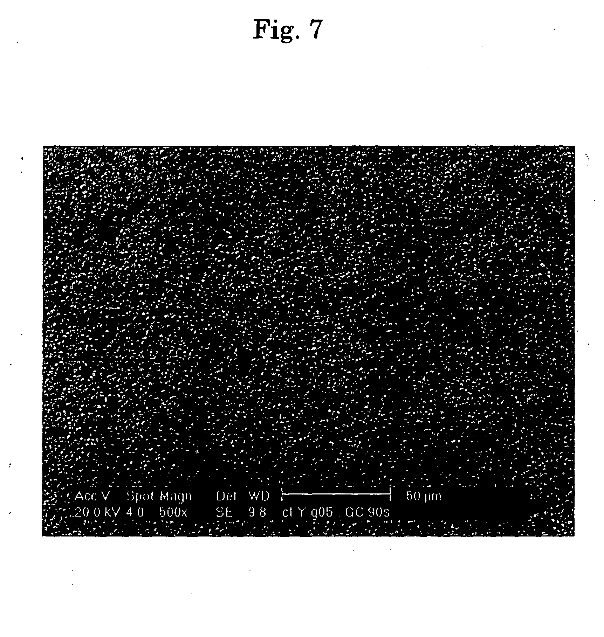

Fig. 6 is a photograph, taken by an electron microscope, of the surface of the sample of comparative example 1 (at a magnitude of 500). Fig. 7 is a photograph showing the surface of the sample of the inventive example 1, taken ny an electron microscope. As described above, it was proved that the surface of the sintered body before the grinding can be considerably flattened according to the present invention.

The surface region of the sample according to the inventive example 1 was observed and fount that the molded body and the film thereon were completely integrated with each other after the sintering. Seam or cracks were not observed between the film and underlying substrate.

Further, although yttrium-aluminum garnet was exemplified as the ceramic powder used in the slurry in the above examples, ceramic powder available for the slurry is not limited to yttrium-aluminum garnet. Powder of the oxide ceramics, composite oxide, nitride ceramics, carbide ceramics and fluoride ceramics described earlier are also available as the ceramic powder used for the slurry.

Further, according to the examples, although the material of the sintered body was made yttrium-aluminum garnet, the material of the produced sintered body is not limited to yttrium-aluminum garnet. It may be listed a sintered body obtained by utilizing powder of the oxide ceramics, composite oxide, nitride ceramics, carbide ceramics or fluoride ceramics described above as the ceramic powder for the material.

## Claims

1. A method of producing a ceramic sintered body, said method comprising the steps of:
preparing a molded body of a ceramics;
preparing a slurry comprising powder of said ceramic and a dispersing medium;
coating a surface of said molded body with said slurry so as to form a free surface; and
sintering said molded body.

2. The method of claim 1, wherein said molded body is prepared by gel cast molding.

3. The method of claim 1 or 2, further comprising the step of contacting a solvent to said surface of said molded body before said slurry is coated.

4. The method of claim 3, wherein said dispersing medium of said slurry comprises at lease one of said solvent.

5. The method of any one of claims 1 to 4, wherein said slurry comprises a slurry for gel cast molding.

6. A ceramic sintered body obtained according to the method of any one of claims 1 to 5.

7. A luminous vessel comprising said ceramic sintered body of claim 6.
